# EUROPEAN PATENT SPECIFICATION

(11) **EP 0 410 012 B1**
(45) Date of publication and mention of the grant of the patent: **05.04.1995**
(21) Application number: 89113494.2
(22) Date of filing: 22.07.1989
(51) Int. Cl.: F16J 9/20

(54) **Piston ring**
Kolbenring
Bague d'étanchéité pour piston

(43) Date of publication of application: 30.01.1991
(73) Proprietor: IDE, Russell, D., Exeter, RI 02822 (US)
(72) Inventor: IDE, Russell, D., Exeter, RI 02822 (US)
(74) Representative: Jack, Bruce James

(56) References cited:
- US-A- 3 359 872

## Description

### Background of the Invention

This invention relates to piston rings such as used in internal combustion engines. There are presently two general approaches to piston ring design. The first approach uses a space expander ring to provide a spring-type force to push a sealing ring against the cylinder wall to cause sealing. In this first approach, the mechanical spring loading is continuous and creates continuous undesirable friction. The second approach is exemplified by US-A-3 608 911, that utilises a flexible plastic support that expands outward under the pressure of combustion gases to effect sealing. In the second approach also exemplified by US-A-3 359 872 discussed below, the sealing force is proportional to the amount of gas pressure being applied to the seal but does not take into account frictional drag and other hydrodynamic forces that cause increased wear, friction and reduced sealing. Additionally, all traditional rings are split to allow for installation. The split construction forms an added path for the escape of gas by the ring.

Thus, US-A-3 359 872 discloses a sealing ring construction that may be applied to piston sealing. The sealing ring, which may be constructed as a number of segments, has an outer sealing face member and is held in a ring groove with a flexible support such that when there are no dynamic gas loads acting on the seal the ring is held with a small clearance between its sealing face and the cylinder wall. Under dynamic gas loads, however, the gas pressure balance acting on the ring expands it to reduce its clearance from the cylinder wall to a value at which gas flow past the sealing face is restricted but there is no actual wearing contact between this face and the cylinder wall, the clearance and the restricted gas flow obviating the need for lubrication. In one disclosed embodiment, the flexible support consists of an arch beam section terminating in webs that extend at an angle to the sealing face member and engage the piston to support the face member spaced from the piston.

### Summary of the Invention

The present invention provides a piston and ring assembly in which the ring comprises an outer sealing face member and a support structure that permits deflection of the sealing face member under load to cause the formation of a hydrodynamic wedge between the sealing face of the sealing face member and the cylinder wall. Thus, under the loading of friction and pressure, the sealing face member moves to form a lubricating wedge that seals along its trailing edge while maintaining a fluid film to reduce friction and wear. By this means, one of the primary objects of the present invention, to provide a piston ring that operates hydrodynamically in a bearing-like fashion to provide improved sealing, reduced wear, longer life and lower friction, is achieved. A second object, to provide a seal that will operate in high temperatures and/or corrosive chemical environments may also be achieved by this construction, as may a third object, to provide a piston ring which may be installed as a continuous ring to eliminate the potential escape of gases through splits in the ring. While there are several configurations of the present invention, it is preferred that the support structure be arranged in such a way that the trailing sealing face edge be capable of outward radial movement to cause improved sealing. In the case of oil control rings, the configuration is preferably such as to eliminate overturning and insure that the scraping edges travel in a path that is parallel to the cylinder wall. A dog leg ligament configuration in the support structure may be used to preload the scraping edge(s) against the cylinder wall.

### Brief Description of the Drawings

Fig. 1 is a cross-section of a standard piston received in a cylinder with multiple piston rings;
Fig. 2 is an enlarged sectional view of a piston ring of the present invention showing the ring in at rest position and deflected position;
Fig. 2A is a fragmentary perspective view of the piston ring shown in Fig. 2;
Fig. 3 is an enlarged sectional view of a piston ring of the present invention showing a dog leg in the support structure that allows a preload to be applied to the face;
Fig. 4 is an enlarged sectional view of an oil control ring made in accordance with the present invention; and Fig. 5 is a diagramatic view illustrating with legends a compressive load applied to achieve installation.

### Description of the Preferred Embodiments

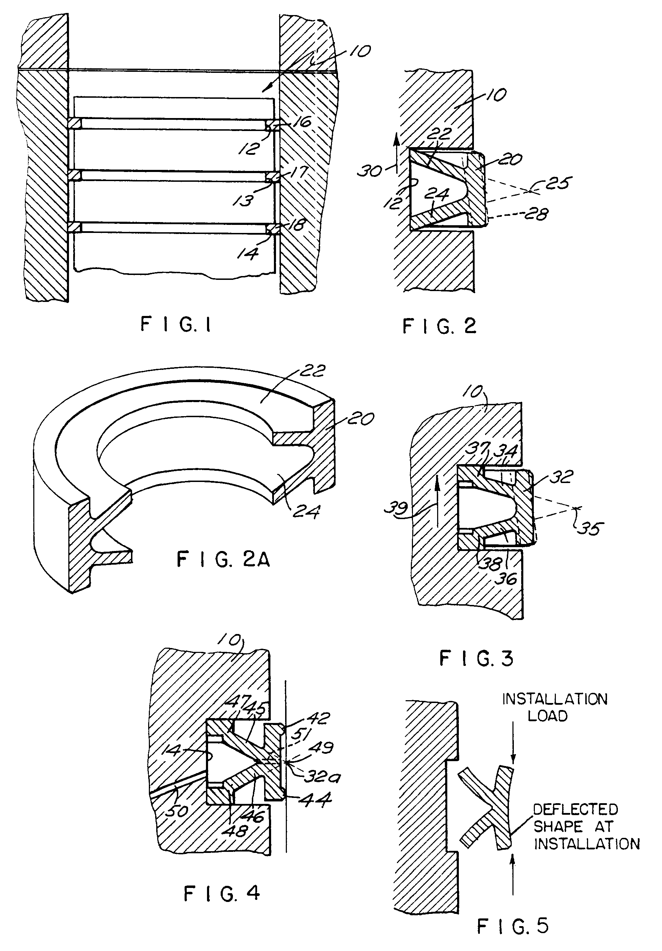

Referring to the drawings and particularly to Fig. 1, there is illustrated a piston 10 of the type that is used in internal combustion engines and the like. The piston 10 is equipped with a plurality of circumferential grooves 12, 13 and 14 and these grooves receive piston rings which project outwardly therefrom to provide a seal between the piston and the cylinder in which the piston is received. The rings may be of the compression type such as the rings 16 and 17 or may be oil-control rings such as the ring 18. In the view illustrated in Fig. 2, there is seen an improved structure in accordance with the invention of a piston ring which is received in a groove such as a groove 12 and which consists of a flat cylindrical sealing face indicated at 20, which face is provided on a circumferential member supported by a pair of leg like circumferential ligaments 22 and 24. As seen in a perspective view, these legs or ligaments 22 and 24 are arranged relative to the face 20 of the ring in such a way that the intersection of the ligaments will be at a point in front of the face 20 as at 25. By virtue of this type of structure, the piston ring face will deflect upon movement such that the trailing edge as seen in broken lines at 28 will move toward the cylinder wall or outwardly as the piston moves upwardly as seen by the arrow 30. In this fashion, a wedge of oil film will be formed between the face 20 and the cylinder wall, it being understood that, when the piston moves downwardly that the reverse action occurs. It should also be pointed out that the degree of deflection that is illustrated by the broken lines, is greatly magnified merely to illustrate the principle and is not to be construed as to scale whatsoever inasmuch as the movement may be no more than 0.025 mm (.001 inch).

Referring now to Fig. 3, there is illustrated a piston ring in which the legs or ligaments are formed in a slightly different fashion so that they effectively have a dog leg that allows a pre-load to be applied to the face. Here, the sealing face member of the piston ring 32 is supported by ligaments 34 and 36 that extend from the rear face thereof and which ligaments extend at an angle to the member and to each other so that again an imaginary extension thereof will meet at a point such as 35 as seen in the drawings which is in front of the sealing face 32. The lower parts of the ligament sections have dog legs as at 37 and 38, respectively. In essence, the sealing face member will similarly deflect, as in the previous embodiment, to form a wedge shape to effect hydrodynamic action that is formed with the lubricating oil.

Referring now to Fig, 4, there is disclosed a further modification to the arrangement as shown in Fig. 3 where the ring face 32a has at either edge thereof, scraping edges 42, 44 which extend circumferentially about the sealing face. It will be noticed that the scraping edges 42 and 44 are spaced apart; also, it will be noted that the ligaments 45 and 46 that support the sealing face member are arranged so that their imaginary extensions intersect at 32a on the notional cylindrical surface 49 tangential to the scraping edge which eliminates any overturning and insures contact on both scraping edges. Indeed, the ligaments also have dog legs 47, 48 as seen in the previous embodiment that again allow a pre-load to be applied to the face and the scraping edges 42 and 44. Also, inasmuch as this particular piston ring structure has been designed for use as the lower or oil-control ring, an oil duct 50 may be provided to allow a passage of oil between the ring groove 14 and the cylinder and a further duct 51 through the sealing face member allows oil to be fed between the scraping edges.

Referring now to Figure 5, there is illustrated the loading and deflections encountered during installation of the piston ring. For installation, the structure is oriented in such a way that when a compressive load is placed on the outside diameter of the ring as seen by the two arrows, the ring deflects to cause an increase in the inside diameter. While the deflections shown are for the preferred embodiment, it should be noted that various loadings and support structure design may be utilized to obtain the desired outward movement of the inside diameter for installation. It should also be apreciated that the deflections obtained are relatively small and on the order of 1 to 2mm, so it may be likewise appreciated that the ring groove is more shallow than those in use in the present state of the art.

The rings of the within described form may be made from a variety of materials, as for example steel, high temperature plastics of the polyimide or p.t.f.e. family or of a ceramic.

## Claims

1. A piston and ring assembly for reciprocation in a cylinder, said assembly comprising a piston (10) having a predetermined diameter and at least one ring groove (12,13,14) therein, and a piston ring received in said ring groove, the piston ring comprising an outer sealing face member and a support structure, the outer sealing face member having a sealing face (20) with a diameter greater than the predetermined diameter of the piston and being supported within the ring groove by the support structure and extending circumferentially around the piston, characterised in that said support structure comprises a pair of webs (22,24; 34,36; 45,46) extending circumferentially of the sealing face member and at an angle thereto such that the notional intersection (25,35, 32a) of the webs is located outside the sealing face (20), whereby the deflection of the sealing face member under load is such as to cause formation of a hydrodynamic wedge between the sealing face (20) and the cylinder wall.

2. A piston and ring assembly according to Claim 1, further characterised in that said support structure webs are so disposed that the deflection of the sealing face member under load is such as to cause the trailing edge (28) thereof to move outwardly, towards the cylinder wall.

3. A piston and ring assembly according to Claim 1 or 2, further characterised in that the sealing face member has spaced-apart scraping edges (42,44) extending outwardly of said sealing face (20).

4. A piston and ring assembly according to Claim 3, further characterised in that said notional intersection (35a) of the webs is on a notional cylindrical surface tangential to the scraping edges (42,44).

5. A piston and ring assembly according to any one of Claims 1 to 4, further characterised in that the sealing face member is in the form of a continuous ring.

6. A piston and ring assembly according to any preceding claim, further characterised in that the sealing face member is unitary with said support structure.

7. A piston and ring assembly according to any preceding claim, wherein said support structure comprises a plurality of frustum-shaped ligaments (22,24; 34,36; 45,46) each having an outer frustum periphery and an inner frustum periphery, the outer frustum periphery of each ligament being connected to the sealing face member.

8. A piston and ring assembly according to Claim 7, further characterised in that at least two of said ligaments are tapered away from each other such that the outer frustum peripheries thereof are closer to one another than the inner frustum peripheries thereof.

9. A piston and ring assembly according to Claim 8, further characterised in that the said two ligaments converge toward a point (25,35,32a) proximate the sealing face (20).

10. A piston and ring assembly according to Claim 9, further characterised in that the said point of convergence is radially outside the sealing face (20).

11. A piston and ring assembly according to Claim 7 or any claim dependent thereon, further characterised in that the support structure comprises a cylindrical ligament extending from the inner frustum periphery of each of said frustum-shaped ligaments.

12. A piston and ring assembly according to any preceding claim, further characterised in that said sealing face member and said sealing support structure are so configured that compressive load applied axially to the sealing face member causes deflection to increase the internal diameter of the support structure.

13. A method of assembling a piston and ring assembly according to Claim 12, comprising applying axial compressive load to the sealing face member of the ring to cause the support structure internal diameter to exceed the external diameter of the piston, fitting the ring over the piston and into register with the ring groove to receive the ring, and releasing said compressive load.

## Patentansprüche

1. Kolben- und Kolbenringanordnung zur Hin- und Herbewegung in einem Zylinder, umfassend einen Kolben (10) mit einem vorbestimmten Durchmesser und wenigstens einer Ringnut (12, 13, 14) darin, einen in der Ringnut aufgenommenen Kolbenring, der ein äußeres Dichtflächenteil und eine Stützstruktur aufweist, wobei das äußere Dichtflächenteil eine Dichtfläche (20) aufweist, deren Durchmesser größer ist als der vorbestimmte Durchmesser des Kolbens und die in der Ringnut von der Stützstruktur abgestützt wird und sich in Umfangsrichtung um den Kolben herum erstreckt, dadurch gekennzeichnet, daß die Stützstruktur ein Paar Versteifungen (22, 24; 34, 36; 45, 46) umfaßt, die in Umfangsrichtung des Dichtflächenteils und unter einem solchen Winkel dazu verlaufen, daß der gedachte Schnittpunkt (25, 35, 32a) der Versteifungen außerhalb der Dichtfläche (20) liegt, wodurch die Durchbiegung des Dichtflächenteils unter Belastung so ist, daß sie die Bildung eines hydrodynamischen Keils zwischen der Dichtfläche (20) und der Zylinderwand bewirkt.

2. Kolben- und Kolbenringanordnung nach Anspruch 1, dadurch gekennzeichnet, daß die Versteifungen der Stützstruktur so angeordnet sind, daß die Durchbiegung des Dichtflächenteils unter Belastung so ist, daß die nachlaufende Kante (28) davon dazu veranlaßt wird, sich nach außen in Richtung zur Zylinderwand zu bewegen.

3. Kolben- und Kolbenringanordnung nach Anspruch 1 oder 2, dadurch gekennzeichnet, daß das Dichtflächenteil beabstandete Schabkanten (42, 44) hat, die von der Dichtfläche (20) nach außen verlaufen.

4. Kolben- und Kolbenringanordnung nach Anspruch 3, dadurch gekennzeichnet, daß der gedachte Schnittpunkt (35a) der Versteifungen auf einer gedachten Zylinderfläche tangential zu den Schabkanten (42, 44) liegt.

5. Kolben- und Kolbenringanordnung nach einem der Ansprüche 1 bis 4, dadurch gekennzeichnet, daß das Dichtflächenteil die Form eines fortlaufenden Rings aufweist.

6. Kolben- und Kolbenringanordnung nach einem der vorangehenden Ansprüche, dadurch gekennzeichnet, daß das Dichtflächenteil einteilig mit der Stützstruktur ausgebildet ist.

7. Kolben- und Kolbenringanordnung nach einem der vorangehenden Ansprüche, dadurch gekennzeichnet, daß die Stützstruktur eine Anzahl kegelstumpfförmiger Bänder (22, 24; 34, 36; 45, 46) aufweist, die jeweils einen kegelstumpfförmigen Außenumfang und einen kegelstumpfförmigen Innenumfang haben, wobei der kegelstumpfförmige Außenumfang eines jedes Bandes mit dem Dichtflächenteil verbunden ist.

8. Kolben- und Kolbenringanordnung nach Anspruch 7, dadurch gekennzeichnet, daß wenigstens zwei der Bänder konisch aufeinander zulaufen, so daß ihre kegelstumpfförmigen Außenumfänge näher beieinander liegen als ihre kegelstumpfförmigen Innenumfänge.

9. Kolben- und Kolbenringanordnung nach Anspruch 8, dadurch gekennzeichnet, daß die beiden Bänder auf einen Punkt (25, 35, 32a) zulaufen, der der Dichtfläche (20) benachbart ist.

10. Kolben- und Kolbenringanordnung nach Anspruch 9, dadurch gekennzeichnet, daß die Bänder auf einen Punkt zulaufen, der sich radial außerhalb der Dichtfläche (20) befindet.

11. Kolben- und Kolbenringanordnung nach Anspruch 7 oder einem darauf rückbezogenen Anspruch, dadurch gekennzeichnet, daß die Stützstruktur ein zylindrisches Band umfaßt, das sich vom kegelstumpfförmigen Innenumfang eines jeden der kegelstumpfför migen Bänder erstreckt.

12. Kolben- und Kolbenringanordnung nach einem der vorangehenden Ansprüche, dadurch gekennzeichnet, daß das Dichtflächenteil und die Dichtungsstützstruktur so angeordnet sind, daß eine axial auf das Dichtflächenteil wirkende, zusammendrückende Belastung eine Durchbiegung bewirkt, die den Innendurchmesser der Stützstruktur vergrößert.

13. Verfahren zum Zusammenbau einer Kolben- und Kolbenringanordnung nach Anspruch 12, bei dem eine axiale, zusammendrückende Belastung auf das Dichtflächenteil des Rings ausgeübt wird, um den Innendurchmesser der Stützstruktur dazu zu veranlassen, den Außendurchmesser des Kolbens zu überschreiten, wonach der Ring über den Kolben und in Übereinstimmung mit der Ringnut aufgeschoben wird, um den Ring aufzunehmen, und die zusammendrückende Belastung gelöst wird.

## Revendications

1. Ensemble piston-segment prévu pour un déplacement alternatif dans un cylindre, ledit ensemble comportant un piston (10) ayant un diamètre prédéterminé et dans lequel est prévu au moins une gorge de segment (12, 13, 14), et un segment de piston reçu dans ladite gorge de segment, le segment de piston comportant un élément de face d'étanchéité extérieur et une structure de support, l'élément de face d'étanchéité extérieur ayant une face d'étanchéité (20) avec un diamètre supérieur au diamètre prédéterminé du piston et étant supporté dans la gorge de segment par la structure de support et s'étendant circonférentiellement autour du piston, caractérisé en ce que ladite structure de support comporte une paire de nervures (22, 24; 34, 36; 45, 46) s'étendant circonférentiellement par rapport à l'élément de face d'étanchéité et suivant un angle par rapport à celui-ci de telle sorte que l'intersection imaginaire (25, 35, 32a) des nervures se trouve à l'extérieur de la face d'étanchéité (20), la flexion de l'élément de face d'étanchéité sous charge étant telle qu'elle entraîne la formation d'un coin hydrodynamique entre la face d'étanchéité (20) et la paroi de cylindre.

2. Ensemble piston-segment selon la revendication 1, caractérisé en outre en ce que lesdites nervures de structure de support sont disposées de telle sorte que la flexion de l'élément de face d'étanchéité sous charge est telle qu'elle amène le bord arrière (28) de celui-ci à se déplacer vers l'extérieur, en direction de la paroi de cylindre.

3. Ensemble piston-segment selon la revendication 1 ou 2, caractérisé en outre en ce que l'élément de face d'étanchéité possède des bords de raclage espacés (42, 44) qui s'étendent vers l'extérieur de ladite face d'étanchéité (20).

4. Ensemble piston-segment selon la revendication 1, caractérisé en outre en ce que ladite intersection imaginaire (35a) des nervures se trouve sur une surface cylindrique imaginaire tangente aux bords de raclage (42, 44).

5. Ensemble piston-segment selon l'une quelconque des revendications 1 à 4, caractérisé en outre en ce que l'élément de face d'étanchéité est en forme de bague continue.

6. Ensemble piston-segment selon l'une quelconque des revendications précédentes, caractérisé en outre en ce que l'élément de face d'étanchéité est d'un seul tenant avec ladite structure de support.

7. Ensemble piston-segment selon l'une quelconque des revendications précédentes, dans lequel ladite structure de support comporte plusieurs ligaments tronconiques (22, 24; 34, 36; 45, 46) ayant chacune une périphérie tronconique extérieure et une périphérie tronconique intérieure, la périphérie tronconique extérieure de chaque ligament étant reliée à l'élément de face d'étanchéité.

8. Ensemble piston-segment selon la revendication 7, caractérisé en outre en ce que au moins deux desdits ligaments divergent de telle sorte que les périphéries coniques extérieures de ceux-ci sont plus proches l'une de l'autre que les périphéries coniques intérieures.

9. Ensemble piston-segment selon la revendication 8, caractérisé en outre en ce que lesdits deux ligaments convergent en direction d'un point (25, 35, 32a) proche de la face d'étanchéité (20).

10. Ensemble piston-segment selon la revendication 9, caractérisé en outre en ce que ledit point de convergence se trouve radialement à l'extérieur de la face d'étanchéité (20).

11. Ensemble piston-segment selon la revendication 7 ou l'une des revendications en dépendant, caractérisé en outre en ce que la structure de support comporte un ligament cylindrique qui s'étend depuis la périphérie tronconique intérieure de chacun desdits ligaments tronconiques.

12. Ensemble piston-segment selon l'une quelconque des revendications précédentes, caractérisé en outre en ce que ledit élément de face d'étanchéité et ladite structure de support d'étanchéité sont configurés de sorte que la charge de compression appliquée axialement sur l'élément de face d'étanchéité amène la flexion à augmenter le diamètre interne de la structure de support.

13. Procédé d'assemblage d'un ensemble piston-segment selon la revendication 12, comportant l'application d'une charge de compression axiale sur l'élément de face d'étanchéité du segment afin d'amener le diamètre interne de la structure de support à dépasser le diamètre externe du piston, de loger le segment sur le piston et en alignement avec la gorge de segment afin de recevoir le segment, et de relâcher ladite charge de compression.
